# EUROPEAN PATENT APPLICATION

(11) **EP 0 617 566 A1**
(43) Date of publication of application: **28.09.1994**
(21) Application number: 94908189.7
(22) Date of filing: 10.08.1993
(51) Int. Cl.: H04Q 7/04

(54) **POSITION REGISTRATION SYSTEM OF MOBILE COMMUNICATION TERMINALS**

(30) Priority: 11.08.1992 JP 214100/92
(71) Applicant: FUJITSU LIMITED, Kawasaki-shi, Kanagawa 211 (JP)
(72) Inventor: OHSHIMA, Kenichi, Fujitsu Limited, Kawasaki-shi, Kanagawa 211 (JP); ITOH, Hiroshi, Fujitsu Limited, Kawasaki-shi, Kanagawa 211 (JP); HOUMURA, Toshikazu, Fujitsu Limited, Kawasaki-shi, Kanagawa 211 (JP)
(74) Representative: Lehn, Werner, Dipl.-Ing.
(86) International application number: JP9301122
(87) International publication number: WO9405128

(57) **Abstract**

In a system wherein a plurality of communication terminals are connected with one another, or the mobile communication terminals and fixed communication terminals are connected with one another by a switchboard through a base station, the present invention discloses a system which registrates a call area of each mobile communication terminal to the switchboard through the base station. The system includes the switchboard (300), a plurality of base stations (200, 210) connected to this switchboard (300) and mobile communication terminals (100, 110) connected wireless to the base stations (200, 210), respectively. The mobile communication terminals (100, 110) registrate their own call area positions to the switchboard (300) through the base stations (200, 210), respectively. A registration procedure for registering the call area includes a first position registration sequence and a second position registration sequence. The first position registration sequence includes a procedure for authenticating whether or not the mobile communication terminal (100, 110) sending the position registration request to the switchboard (300) is the terminal the use of which is permitted in this system. The second position registration sequence is executed when the mobile communication terminal (100, 110) has already made the position registration to the switchboard (300) in this system.

## Description

### BACKGROUND OF THE INVENTION

### Field of the Invention

The present invention relates to a location registration system for a movable communication terminal. More particularly, it relates to a system which registers an access area of the movable communication terminal via a base station in a switch, wherein the plural movable communication terminals or a movable communication terminal and a fixed communication terminal are connected each other via the base station by the switch.

### Background Art

Recently, the development of a movable communication is remarkable, and particularly, it is extensively used because it is handy to carry the movable communication terminal.

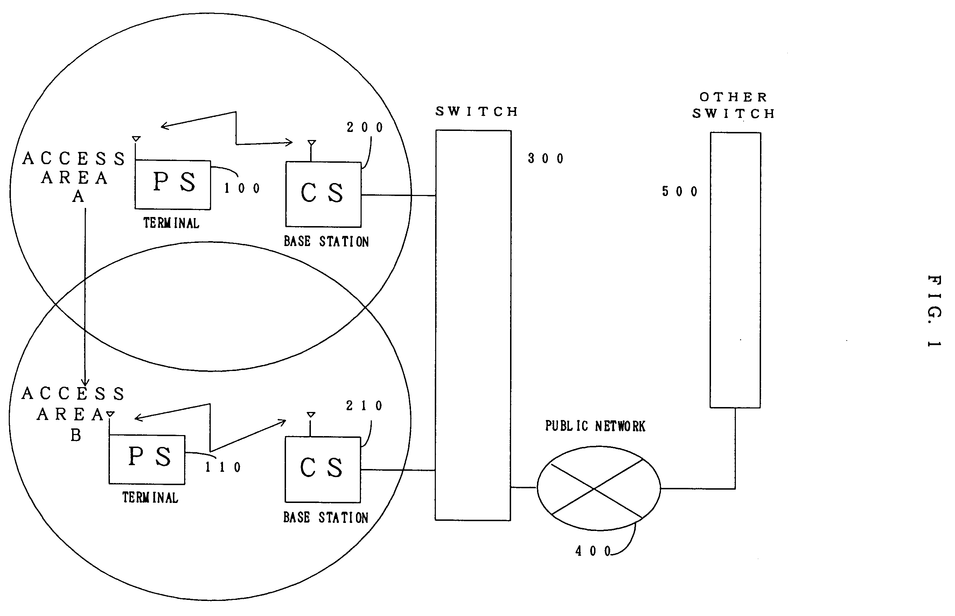

The movable communication system using the movable communication terminal is as shown in Fig. 1. The plural base stations 200 and 210 are connected to the switch 300. And each base station has the access areas A and B.

The switch 300 is also connected to general communication terminals, not shown in Fig. 1, via a public network 400 and other switch 500.

The plural movable communication terminals 100 and 110 within the access areas A and B, and the base stations 200 and 210 are connected by a radio. Further, when one movable communication terminal and other one, or the movable communication terminal and the other general communication terminal are connected by the switch 300, the switch 300 accesses the movable communication terminals 100 and 110 via the stations 200 and 210 controlling the access areas A and B, in which the movable communication terminals 100 and 110 exist.

Accordingly, it is always required for the movable communication terminals 100 and 110 to register the existing locations, that is, the access areas A and B, for the switch 300.

However, the location is moved frequently depending on carrying the terminal because it is handy to carry out the movable communication terminal. Accordingly, the time of performing the location registration for the switch 300 increases much more.

On the other hand, in performing the location registration, the switch 300 executes an authentication procedure whether the movable communication terminals 100 and 110 are exact terminals permitted to communicate on the system or not, every time the location registration is performed.

In this respect, the processing amount on the switch 300 in the execution of the conventional location registration becomes larger. However, it is not always necessary that the authentication procedure for the movable communication terminals is performed every time the location registration is performed.

Therefore, in the conventional system, the redundancy processing is increased in proportion to the time of location registration, and a burden on the switch is hard, so that the problem occurs in relation to the processing capacity.

The redundancy processing in the movable communication terminals is also increased, therefore, the consumption electrical energy of the terminal also becomes larger.

### DISCLOSURE OF THE INVENTION

It is therefore an object of the present invention to provide a location registration system, which can reduce the processing amount of an switch required for the location registration processing of the movable communication terminal.

It is another object of the present invention to lighten the burden on the switch and reduce the consumption electrical energy of terminals, depending on decreasing the redundancy processing on the location registration process of the movable communication terminal and executing the location registration process effectively.

It is still another object of the present invention to decrease the redundancy processing depending on dividing the method of the location registration process to the processing sequence for the first location registration and the processing sequence for the location registration on and after the second time.

It is a further object of the present invention to provide a location registration system for registering an access area location for each of the movable communication terminals to the switch via the corresponding one of the plural base stations, comprising: in a movable communication system having a switch, plural base stations connected said switch and movable communication terminals connected with each of the plural base stations by a radio channel, comprising: first location registration sequence for performing the authentication whether the movable communication terminal which sent a location registration request to the switch is a terminal permitted to use on the concerned system or not; and a second location registration sequence for executing in the case where the movable communication terminal had already performed the location registration for said switch on the concerned system.

Further, other objects of the present invention become clearly by the description for explaining embodiments according to the attached drawings and claims.

### BRIEF DESCRIPTION OF THE DRAWINGS

The present invention is clearly understood by the description of the attached drawings and claims, but the following drawings are prepared for understanding the present invention. Accordingly, embodiments shown in the drawings are for understanding the present invention, and the present invention is not restricted to those embodiments.

Fig. 1 is a schematic diagram for explaining a movable communication switch system.

Fig. 2 is a structural block diagram for a movable communication terminal, a base station or an switch which explains one embodiment of the present invention.

Fig. 3 is a diagram for explaining the structure of physical slot for communication between the radio sections.

Fig. 4 is a functional block diagram for explaining the operation among the movable communication terminal, the base station and the switch according to the present invention.

Fig. 5 is a structural diagram of the content of EEPROM which is provided in the movable communication terminal.

Fig. 6 is an operation flow diagram for explaining the process of the movable communication terminal on the location registration.

Fig. 7 is an operation flow diagram for explaining the process of the base station on the location registration.

Fig. 8 is an operation flow diagram for explaining the process of the switch on the location registration.

Fig. 9 is a diagram for explaining the first location registration sequence according to the present invention.

Fig. 10 is a diagram for explaining the second location registration sequence according to the present invention.

### Best Mode of Carrying out the Invention

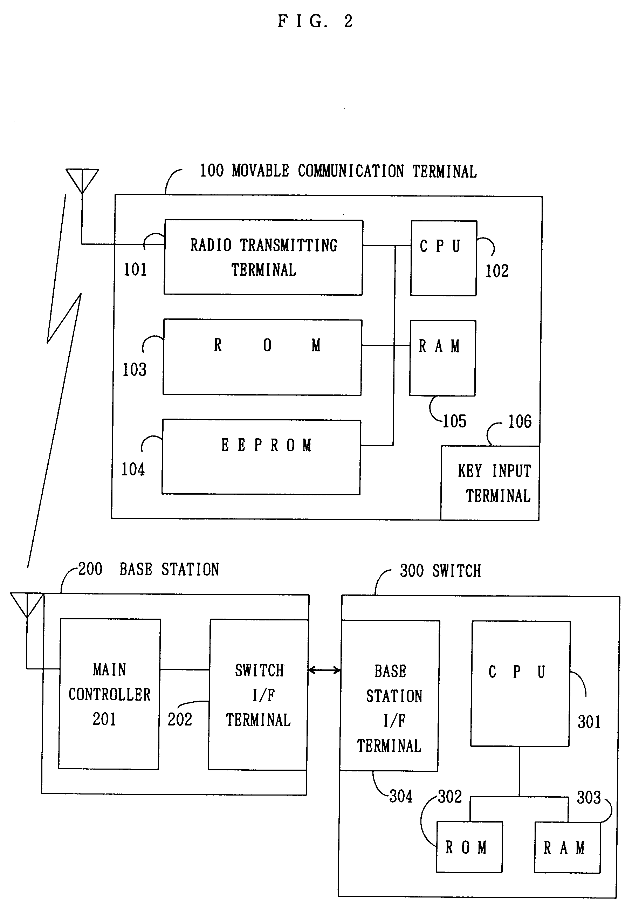

Fig. 2 is an example for the structure of the movable communication terminal 100, the base station 200 and the switch 300 for carrying out the present invention. The public network and the other switch and so on which are further connected to the switch 300 are not shown.

The movable communication terminal 100 includes a main controller having the radio transmitting/receiving terminal 101, CPU 102, ROM 103, RAM 105 and EEPROM 104, and a key input terminal 106 having all sorts of the operation keys, for example, a dial and so on.

CPU 102 performs communication control based on the control program stored in ROM 103.

The base station 200 includes the controller 201 having the same structure as the main controller of the movable communication terminal 100, and a switch I/F terminal 202 which performs an interface of a signal with the switch 300.

Further, the switch 300 includes the base station I/F terminal 304 which acts as an interface of signal among CPU 301, ROM 302, RAM 303 and the base station.

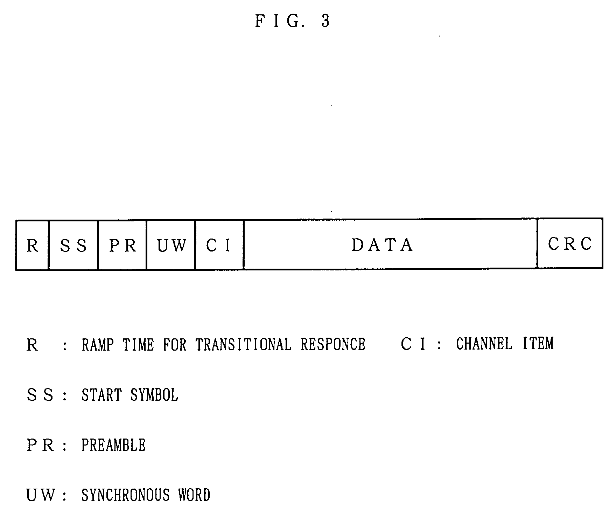

Fig. 3 is a diagram for explaining the structure of the physical slot which is a format of a digital signal transmitted and received in the radio section between the movable communication terminal 100 and the base station 200.

A ramp time for transitional response R is provided in the head of the physical slot to absorb the setup transitional response of the signal. SS means a start symbol for indicating the start time of the signal of the physical slot.

PR means preamble and UW means a slot in which a synchronous word is set.

The base station 200 is connected to a plural of movable communication terminals 100 in the access area by radio. Accordingly, the radio frequency (the channel) used per each movable communication terminal is different. CI means the channel item used by these communication terminals.

DATA is an area of transmitted and received data, and the frame signal is inserted in the head of that area. CRC is a check bit for detecting an error and correcting it.

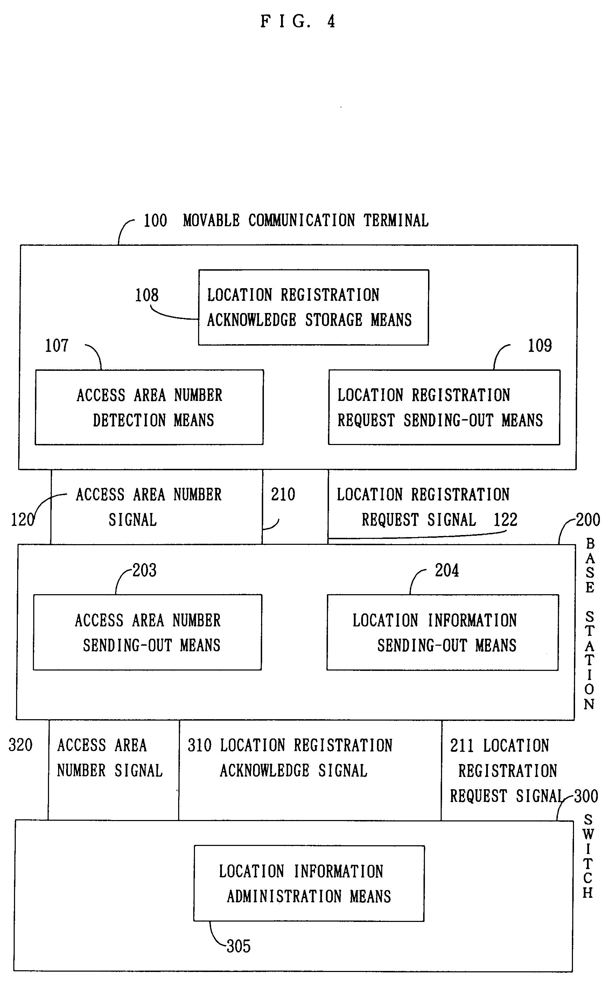

Fig. 4 is a diagram for illustrating the each operation of the base station 200 or the switch 300 as a functional block. To help understanding of the present invention depending on Fig. 4, a brief description of the location registration process of the movable communication terminal will be given.

The movable communication terminal 100 has the access area number detection means 107, the location registration acknowledge storage means 108 or the location registration request sending-out means 109, as the function means for the location registration process.

The function of each means in Fig. 2, is executed by CPU 102, RAM 105 and EEPROM 104 as the data storage means, which are controlled in reading and writing by the CPU 102.

On the other hands, the access area number sending-out means 203 and the location information sending-out means 204 are included in the base station 200.

These means are fulfilled its function by the controller 201 as shown in Fig. 2 in the base station 200.

Further, the switch 300 has the location information administration means 305. This means is fulfilled its function by the CPU 301 and the RAM 303 in the switch 300 shown in Fig. 2.

In the above-described structure, the movable communication terminal 100 receives the access area number signal 120 sent periodically from the access area number sending-out means 203 of the base station 200, and detects this signal by the access area number detection means 107.

Moreover, in Fig. 4, the base station 200 receives the access area number signal 320 from the switch 300, and sends out the access area number signal 120 to the movable communication terminal 100 by the access area number sending-out means 203 based on the signal 320. This is because the system in Fig. 4 uses the switch 300 as a private branch switch.

That is, the base station 200 does not have the function for administering the access area in case of a private branch switch. So that the access area number signal 320 is sent to the base station 200 from the switch 300. On the other hand, as the base station 200 has the function for administering the access area number in case of a public network, the access area number signal 320 is not supplied from the switch 300.

And this detected access area number is compared with the access area number stored in EEPROM 104 of the movable communication terminal 100. When the coincidence of the both number is detected, it is confirmed that the movable communication terminal 100 exists in the access area administered by the base station 200.

Accordingly, in this case, there is no need to perform the location registration again.

Meanwhile, when the access area number signal 120 sent from the base station 200 is detected by the access area number detection means 107, and the detected area number is different from the access area number stored in EEPROM 104, it can be confirmed that the movable communication terminal 100 has already moved to the other access area.

Accordingly, in this case, it is required to perform the location registration for the switch 300 from the movable communication terminal 100 again.

In this case, the location registration request signal 122 is sent from the movable communication terminal 100 to the base station 200.

And then, the location registration signal 122 is carried on the data area of the physical slot between the radio sections shown in Fig. 3, and sent to the base station 200.

After the location registration request signal 122 has been sent to the base station 200, the base station 200 confirms the terminal number of the movable communication terminal 100 which has sent the location registration request signal 122 according to the structure of the physical slot in the radio section shown in Fig. 3. This terminal number is also carried on the data area of the physical slot in the radio section by the terminal 100.

After then, the base station 200 transmits the location registration request signal 211 to the switch 300 by the location information sending-out means 204.

Then the location registration request signal 211 sent from the location information sending-out means 204 of the base station 200 to the switch 300, includes the terminal number of the movable communication terminal 100 and the location registration request signal 122.

On the other hand, in the the switch 300, the location registration information administration means 305 performs the location registration for the requested movable communication terminal 100, based on the location registration request signal 211 sent from the base station 200.

In this location registration, the switch 300 stores the access area number information and the movable communication terminal number into RAM 303 as the location administration data.

And when the location registration processing is completed in the switch 300, the location registration acknowledge signal 310 is sent to the base station 200.

And then, the location registration acknowledge signal 210 is sent out to the movable communication terminal 100 from the base station 200 when the base station 200 receives an information of completing the location registration, that is, the location registration acknowledge signal 310.

In the movable communication terminal 100, the location registration acknowledge storage means 108 stores the information of the acknowledge of location registration, when the location registration acknowledge signal 210 has been sent from the base station 200.

In this movable communication terminal 100, the storage of the information of location registration acknowledge performed by the location registration acknowledge storage means 108 is executed by storing into EEPROM 104 of the movable communication terminal 100 shown in Fig. 2 later-described.

Here it is described as above that the location registration request is performed when the access area number signal 120 is received from the base station 200, and the area number is different from the area number stored in the movable communication terminal 100 in Fig. 4, under the condition that in the movable communication 100, the location registration request sending-out means 109 sends the location registration request signal 122 to the base station 200.

On the other hand, besides this condition, the location registration request sending-out is performed similarly every time the movable communication terminal 100 is switched into the state of power ON from the state of power OFF.

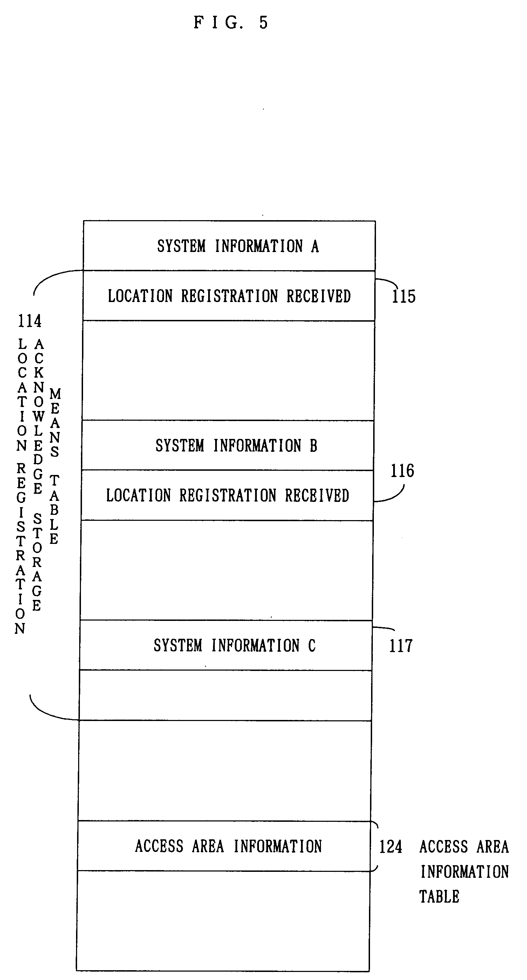

Fig. 5 is a diagram for indicating the content in EEPROM 104, shown in Fig. 2, which the movable communication terminal 100 has in relation to the location registration request processing.

That is, EEPROM 104 has the location registration acknowledge storage means table 114 and the access area information table 124 as shown in Fig. 5.

The location registration acknowledge storage means table 114 stores, for each movable radio system, wherein the movable communication terminal 100 is employed, an information in relation to the system and also stores whether the location registration on the concerned system has already been acknowledged or not.

In the example shown in Fig. 5, the location registration acknowledge is performed in the systems A and B (refer to 115, 116 in Fig. 5).

In relation to the system C, it is understood that the movable communication terminal is not performed the location registration yet (refer to 117 in Fig. 5).

Therefore, as described in Fig. 4, when the access area number signal 120 is received from the base station 200, the information stored in the access area information table 124 on EEPROM 104 shown in Fig. 5 is read out, and these access area numbers are compared under the control of CPU 102 on the movable communication terminal 100.

And after compared these area numbers, the access area number signal 120 sent from the base station 200 is updated and stored in the access area information table 124, again.

In the mean time, the acknowledge of the location registration is stored in the location registration acknowledge storage means table 114 under the control of the registration acknowledge storage means 108 shown in Fig. 4.

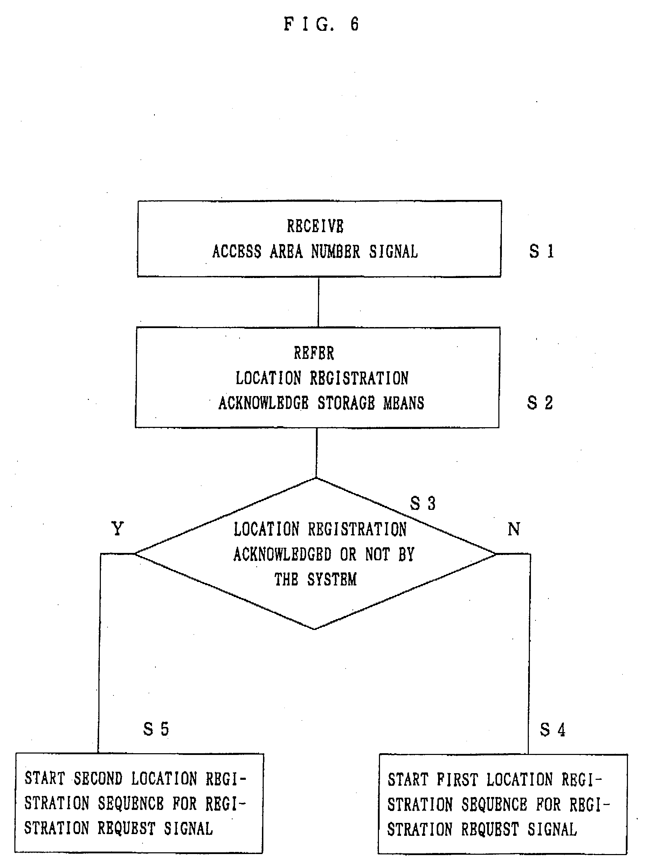

Figs. 6 through 8 illustrate a processing flow in relation to the location registration processing respectively on the movable communication terminal, the base station and the switch.

In Fig. 6, the movable communication terminal receives the access area number signal 120 from the base station 200 as explained in relation to Fig. 4 (STEP S1).

Then, the movable communication terminal refers to the location registration acknowledge storage means table 114 of EEPROM 104, which is the location registration acknowledge storage means (STEP S2).

And, it is determined whether the location registration of the movable communication terminal 100 has been already acknowledged or not on the concerned system administrated by. the switch 300. This performs in reference with the movable registration acknowledge storage means table 114 (STEP S3).

And when the location registration is not performed yet, the first location registration sequence for a registration request signal, as explained later, is started by CPU 102 (STEP S4).

On the other hand, when the location registration acknowledge is already performed, the second location registration sequence for a registration request signal, as explained later similarly, is started by CPU 102 (STEP S5).

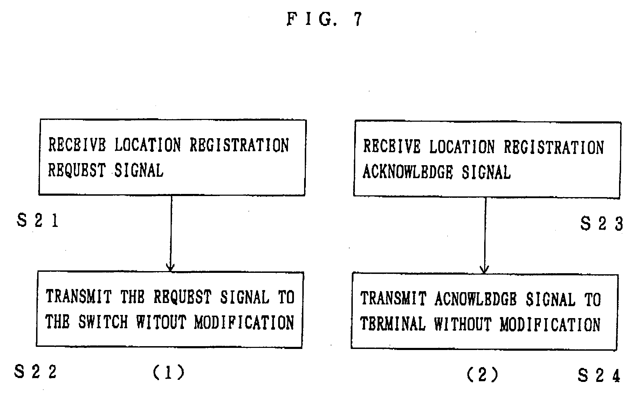

Fig 7 is a processing flow in relation to the location registration on the base station. In (1) of Fig. 7, the location registration request signal is received from the movable communication terminal 100 (STEP S21).

The base station 200 transmits the location registration request signal without any modification from the movable communication terminal 100 for the switch 300 (STEP S22).

On the other hand, in (2) of Fig. 7, when the location registration acknowledge is completed on the switch 300, the location registration acknowledge signal is received from the switch 300 (STEP S23).

Then, the base station 200 transmits this location registration acknowledge signal without any modification to the movable communication terminal 100 (STEP S24).

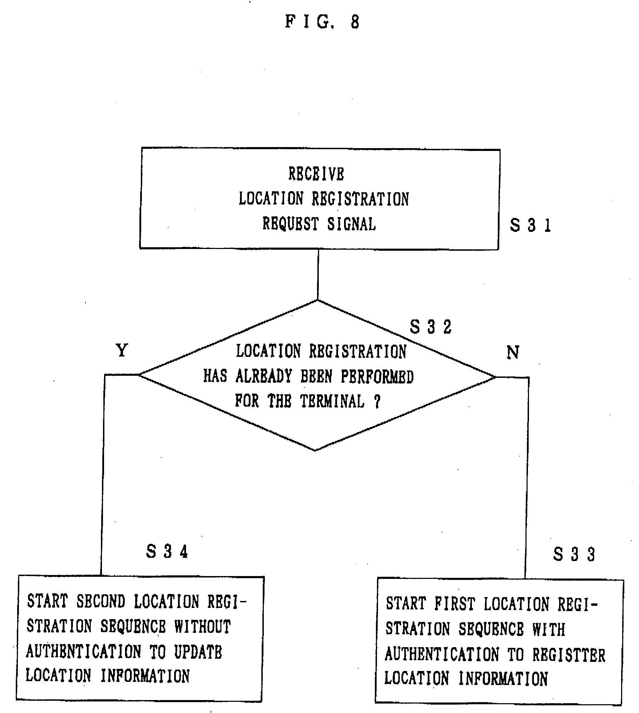

Fig. 8 is a flow chart of the location registration processing on the switch.

When the location registration request signal sent from the movable communication terminal 100 via the base station 200 is received (STEP S31), the location information administration means 305 determines whether the location registration has already been performed for the corresponding movable communication terminal 100, which has sent the location registration request signal (STEP S32).

And when the location registration is not performed yet, the location registration sequence with the authentication, that is, the first location registration sequence for a registration request signal as described in Fig. 6 (STEP S4) is started for performing the registration of the now location information.

On the other hand, in the case where the corresponding movable communication terminal 100 has been performed the location registration, the location information is updated.

In this case, the location registration sequence without the authentication is started, as explained in Fig. 6, which is the second location registration sequence for a location registration request signal (STEP S34).

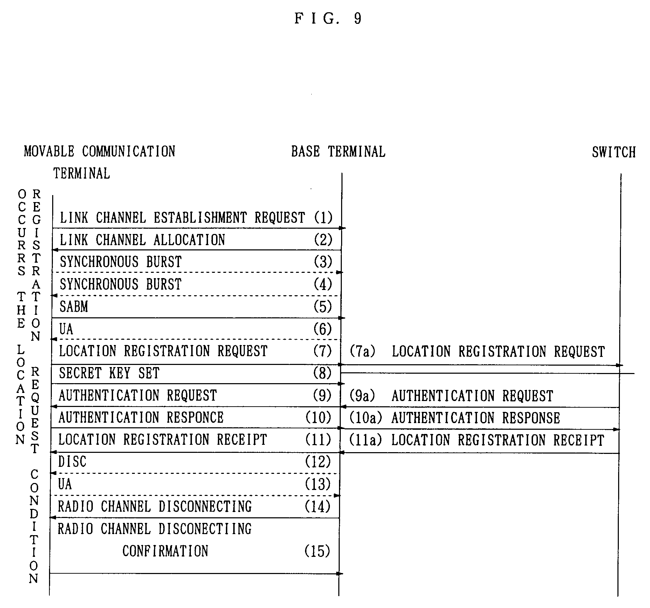

Fig. 9 is a diagram for explaining the first location registration sequence.

The first location registration sequence is performed when the location registration requirement occurs, further, the movable communication terminal 100 looks up EEPROM 104, and confirms whether the storage received the location registration is stored in the corresponding system area on the location registration acknowledge storage means table 114, and the location registration acknowledge is not performed.

The location registration requirement occurs in the case where it is different on comparison with the access area number sent from the base station 200 and the access area number stored in the access area information table 124, when the movable communication terminal 100 moves to the different access area.

Or when the movable communication terminal 100 becomes the condition of power ON from OFF, the location registration requirement condition also occurs.

When either of these location registration requirement conditions occurs, the link channel establishment request ((1) of Fig. 9) is sent from the movable communication terminal 100 toward the base station 200.

When the base station 200 receives the link channel establishment request from the movable communication terminal 100, the link channel allocation for establishing the link between the movable communication terminal 100 and the base station 200, that is, the indication which channel is used to perform the subsequence communication is sent to the movable communication terminal 100 ((2) of Fig. 9).

Moreover, the link channel establishment request is performed by sending the indication of the request and the information signal of the movable communication terminal number, which are set to the data area (DATA) on the structure of physical slot of the radio section in Fig. 3, to the base station 200.

Then, the synchronous word, which is set to the synchronous word area UW on the physical slot of the radio section it is sent from the movable communication terminal 100 to the base station.

The base station 200 sends the synchronous word (UW) toward the movable communication terminal 100, responding to the synchronous word from the terminal 100. Thus, the synchronous establishment is performed between the movable communication terminal 100 and the base station 200. Further, the signal indicated SABM for setting the synchronous balanced mode from the movable communication terminal 100 is sent to the base station 200 ((5) of Fig. 9).

Further, UA for confirming unnumbered system wherein the signal sending is performed without setting the data number ((6) of Fig. 9) is sent from the base station 200.

After that, the location registration request ((7) of Fig. 9) is sent from the movable communication terminal 100 to the base station 200.

The base station 200 sends the location registration request to the switch 300 just as it is.

The switch 300 performs the authentication whether the concerned movable communication terminal finishes the location registration or not, according to the switch processing flow in Fig. 8 as the above-described, for the location registration request sent via the base station 200.

Then, the movable communication terminal 100 instructs the base station 200 to set a secret key.

A specified secret key is set in the communication signal between the movable communication terminal 100 and the base station 200 so that the specified secret key can not be tapped between the radio sections.

Further, when the acknowledgement is performed for the movable registration request on the switch 300, the authentication request is set to the movable communication terminal 100 via the base station 200.

This authentication request is a demand for deciding whether the movable communication terminal 100 is an usable terminal in the concerned system for the location registration requirement from the movable communication terminal 100 or not.

In the process for the authentication request, when the above-described function request required from the movable communication terminal 100 is finished to send out, the switch 300 generates a random pattern for the authentication, sends the authentication request message to the movable communication terminal 100 to inform the random pattern.

On the other hand, the movable communication terminal which received this authentication request message codes the random pattern by using the owned authentication key, and the authentication response message ((10) of Fig. 9) is sent to the base station 200 as the result of the authenticated operation. The base station 200 further informs this response message to the switch 300.

The switch 300 which received the authentication response message from the movable communication terminal 100, decides whether the result of certified operation obtained by using the authentication of random pattern and the authentication key of the movable communication terminal 100 corresponds to one informed from the movable communication terminal 100 or not.

And when it doesn't correspond and the result of authentication is not permitted, the switch returns the message for refusing the location registration, and refuses to process the location registration. When the result of authentication is permitted, it continues to process the location registration.

Then, the switch 300 stores a predetermined registration in the location information administration means 305 of the switch 300, that is, the terminal number of the movable communication terminal 100 and the access area number are registered in the form of a set to finish the location registration normally.

And when the processing was finished, the location registration acknowledge is informed ((11) of Fig. 9).

Accordingly, the base station 200 performs disconnecting of the line (DISC) ((12) of Fig. 9).

UA for confirming the unnumbered system is sent to the movable base station 200 from the movable communication terminal 100 ((13) of Fig.9), and the base station 200 informs the disconnecting of the radio channel to the movable communication terminal 100 ((14) of Fig. 9).

And the information for confirming the disconnecting of the radio channel is informed for the base station 200 from the movable communication terminal 100 ((15) of Fig. 9), and the first location registration sequence is finished.

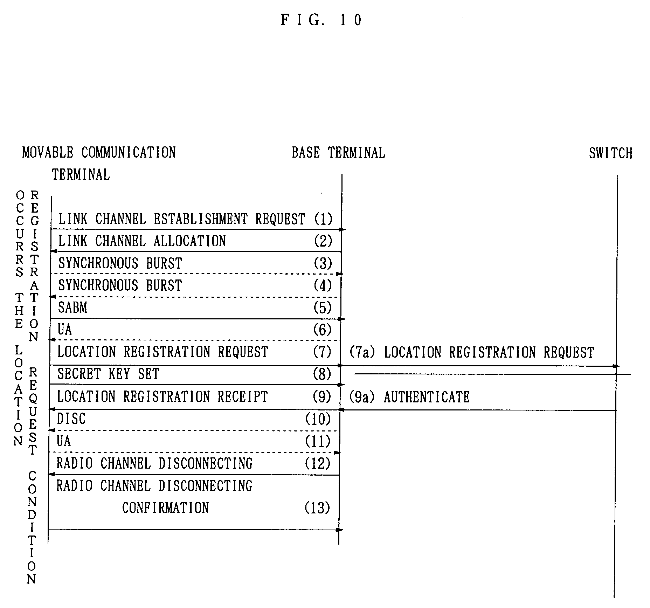

Then, Fig. 10 is a diagram for explaining the second location registration sequence. The second location registration sequence is a sequence which executes when the location registration has already been performed, and a new location registration requirement occurs again.

That is, when the location registration requirement occurs to the movable communication terminal 100, the storage area storing the location registration acknowledge is refferred which corresponds to the concerned system on the location registration acknowledge storage means table of EEPROM 104 on the movable communication terminal 100. And when the acknowledged location registration has already been stored, this first location registration sequence is performed.

This second location registration sequence is equal to the first location registration sequence as the above-described in relation to Fig. 9, basically, and it is started by sending out the link channel establishment request ((1) of Fig. 10) from the movable communication terminal 100 to the base station 200 first.

As the second location registration sequence is equal to the first location registration sequence (Fig. 9) basically, the explanation of the part as the above-described is abbreviated.

In the second location registration sequence explained in Fig. 10, the different point from Fig. 9 is not to perform the authentication request again, after the location registration request ((7) of Fig. 10) is sent from the movable communication terminal 100 to the switch 300 via the base station 200. That is, in the first location registration sequence in Fig. 9, the authentication request for performing the confirmation whether the concerned movable communication terminal 100 is an exact terminal permitted to communicate in the concerned system is sent via the base station 200 from the switch 300 to the movable communication terminal 100.

On the other hand, in the second location registration sequence in Fig. 10, this process is not performed. The other executive steps in the sequence is quite equal to the first location registration sequence in Fig. 9.

The reason why the authentication request is not performed from the switch 300 to the movable communication terminal 100 in the second location registration sequence is as follows;
That is, it is stored about the movable communication terminal 100 which has already performed the location registration request in the switch 300 for the above-described location registration request, in the memory of the switch 300, for example, RAM 303 (Refer to Fig. 2) that the concerned movable communication terminal 100 is the terminal which can communicate in the concerned system.

Accordingly, even when the second location registration, i.e., the movable communication terminal 100 changes the access area, or the second location registration request is sent to the switch 300 depending on the reason the movable communication terminal 100 changes from the condition of power OFF to ON, it has already authenticated that the movable communication terminal is the communicable terminal.

When the second location registration request is sent from the movable communication terminal 100 to the switch 300 according to the present invention as the above-described, the communicable condition in the concerned system of the movable communication terminal 100 based on the authentication request has already been understood. In this respect, there is no need that the switch 300 again performs the procedure of authentication request for the movable communication terminal 100.

Accordingly, in the present invention, it divides the first location registration sequence and the second location registration sequence are separately provided, and the authentication request is not performed in the second location registration sequence.

It is no longer necessary for the switch 300 to confirm whether the movable communication terminal 100 is the terminal which is permitted to use in the concerned system or not, every time the location registration request occurs, as performed in the conventional system.

### Industrial Applicability

While the switch 300 performed the procedure for confirming the authentication of the movable communication terminal 100 every time the location registration request occurs on the conventional system, it becomes possible according to the present invention to avoid processing the redundancy process.

Therefore, the redundancy processing performed every time the location registration request occurs on the side of switch 300, is solved and the burden on the switch 300 is lightened.

At the same time, as the processing accompanying the authentication request becomes not to be required, the movable communication terminal 100 also reduces the consumption of electric power and therefore the invention will make great industrial contribution.

Although the present invention has been described with reference to the embodiments, the invention is not restricted to those.

It should of course be understood that those which are the same as the technical concept of the invention are within the protective scope of this invention.

## Claims

1. In a movable communication system having a switch (300) , plural base stations (200, 210) connected said switch (300) and movable communication terminals (100, 110) connected with each of the plural base stations (200, 210) by a radio channel, a location registration system for registering an access area location for each of the movable communication terminals (100, 110) to the switch (300) via the corresponding one of the plural base stations (200, 210) , comprising:
a first location registration sequence for performing the authentication whether the movable communication terminal (100, 110) which sent a location registration request to the switch (300) is a terminal permitted to use on the concerned system or not; and
a second location registration sequence for executing in the case where the movable communication terminal (100, 110) had already performed the location registration for said switch (300) on the concerned system.

2. The location registration system according to claim 1,
wherein the location registration request signal is sent via a corresponding base station (200, 210) from said movable communication terminal (100, 110) to said switch (300) which is constituted so as to decide whether the movable communication terminal (100, 110) which sent-out said location registration request signal has already performed the location registration or not, send an authenticate request to said movable communication terminal (100, 110) when it is first time to register the access area location, and update the location registration on the informed new access area in the case where the location registration had already been performed.

3. The location registration system according to claim 1 or 2,
wherein the authentication whether the movable communication terminal (100, 110) which sent-out the location registration request signal is a terminal permitted to use on the concerned system is performed by that the switch (300) generates and informs a random pattern to the movable communication terminal (100, 110),
said movable communication terminal (100, 110) codes said random pattern by using a secret key and responds the coded pattern to said switch (300) as the result of authenticated operation, and
said switch (300) operates the random pattern by using the secret key of said random pattern and the secret key of said movable communication terminal (100, 110) and decides whether the result of operation corresponds to the one of authenticated operation responded from said movable communication terminal or not.

4. The location registration system for registering an access area location for each of movable communication terminals comprising movable communication terminals (100, 110), plural base stations (200, 210) connected to the movable communication terminals (100, 110) by radio channels and a switch (300) connected to said plural base stations (200, 210),
said movable communication terminals (100, 110) having a location registration request sending-out means (109) for sending-out a location registration request signal (122) including a terminal number and a location registration request to said switch (300) via said base stations (200, 210) when the requirement of location registration occurs,
said base stations (200, 210) having an access area number sending-out means (208) for sending-out an access area number signal (120) and a location registration information sending-out means (204) for transmitting the location registration request signal (122) sent from said movable communication terminal (100, 110) as the location registration request signal (211) to said switch (300); and
said switch (300) having a location information administration means (305) for receiving said location registration request signal (211) transmitted from said base stations (200, 210), registering the correspondence with the terminal number included in said location registration request signal (211) and said base stations (200, 210) and for sending-out a location registration acknowledge signal (310) for indicating to said movable communication terminal (100, 110) via said base stations (200, 210),
wherein said movable communication terminals (100, 110) further include a location registration acknowledge means (108) for storing the location registration acknowledge signal (210) sent via said base stations,
the location registration is performed according to a first location registration sequence including a procedure of confirming an authentication of the concerned communication terminal between said switch (300) in the case where the location registration acknowledge signal (210) has already been stored in said location registration acknowledge means (108) when said location registration request signal (122) is sent-out, and
the location registration is performed according to a second location registration sequence including a procedure of confirming an authentication of the concerned communication terminal in the case where the location registration acknowledge signal (210) has not been stored in said location registration acknowledge means (108).

5. The location registration system according to claim 4,
wherein said movable communication terminals (100, 110) further have an access area number detection means (107) for detecting an access area number signal (120) sent from said base station (200), and
the requirement of said location registration request occurs when said access area number detection means (107) detects the access area number.

6. The location registration system according to claim 4,
wherein the requirement of said location registration request occurs when said movable communication terminal (100, 110) becomes the state of power ON from OFF.

7. The location registration system according to claim 4,
wherein in the procedure of authenticating and confirming of said communication terminal, said switch (300) generates and informs a random pattern to said movable communication terminal (100, 110),
said movable communication terminal (100, 110) codes the random pattern by using a secret key and responds to said switch (300) and the coded random pattern as a result of authenticated operation, and
said switch (300) further operates said random pattern and the secret key of the concerned movable communication terminal (100, 110) and decides whether the result of operation corresponds to the result of authenticating operation answered from the movable communication terminal.

8. The location registration system according to claim 4,
wherein said switch (300) is a private branch switch, and
said base stations (200, 210) send-out said access area number signal (120) to said movable communication terminal (100, 110) when the access area number signal (320) sent from said switch (300) is received.

9. The location registration system according to claim 4,
wherein said movable communication terminal (100, 110) has a radio transmitting/receiving system (101), CPU (102), ROM(103), EEPROM (104) and RAM (105), and
the functions of said access area number detection means (107), the location registration acknowledge means (108), and the location registration request sending-out means (109) are executed by said CPU (102), EEPROM (104) and RAM (105).

10. The location registration system according to claim 9,
wherein said EEPROM (104) has a location registration acknowledge storage means table (114) and an access area number information table (124),
said location registration acknowledge storage means table (114) has areas (115, 116, 117) for storing whether the location registration is received or not per a system, in which the movable communication terminal (100, 110) is used, and
said access area number information table (124) stores the access area number sent from said base stations (200, 210).

11. The location registration system according to claim 10,
wherein the access area number stored in the access area number information table (124) on said EEPROM (104) is compared with the access area number sent from said base stations (200, 210) and it is detected that the access area number is changed in the case where the number is different from another one.
